# EUROPEAN PATENT APPLICATION

(11) **EP 2 747 002 A1**
(43) Date of publication of application: **25.06.2014**
(21) Application number: 12745991.5
(22) Date of filing: 31.01.2012
(51) Int. Cl.: G06Q 10/06

(54) **MOBILE TERMINAL MANAGEMENT SERVER, AND MOBILE TERMINAL MANAGEMENT PROGRAM**

(71) Applicant: IPS CO., Ltd, Kobe-shi, Hyogo 650-0044 (JP)
(72) Inventor: AKITA, Toshifumi, Kobe-shi Hyogo 650-0044 (JP)
(74) Representative: Korenberg, Alexander Tal
(86) International application number: PCT/JP2012/000634
(87) International publication number: WO 2013/114442

(57) **Abstract**

In a business system that provides information on a report to a mobile communication terminal, a processing load required for a search of data is reduced, and operability of a search operation of the mobile communication terminal is improved.

A mobile terminal management server 10 in which ERP runs provides a search condition designation screen (for example, a slip search screen) used to designate a search condition, including a search condition representing code information taken in the mobile terminal, in response to the request from mobile terminals 31 to 3N; receives a search condition designated through the search condition designation screen on which selection item arrangement circle display regions 601, 602 and 603 to display selection item arrangement circles DC, SC and PC, in each of which a plurality of selection items selectable to designate the search condition are arranged substantially on a circumference, are provided from the mobile terminals 31 to 3N; searches for report data satisfying the received search condition by referring to a process flow table PT; and provides search result data (a search result list display screen) representing the searched report data to the mobile terminals 31 to 3N as a search result.

## Description

### CROSS REFERENCE TO RELATED APPLICATIONS

The present application is a U.S. national phase application under 35 U.S.C. §371 of PCT Application No. PCT/JP2012/000634, filed on January 31, 2012.

### Technical Field

The present invention relates to a mobile terminal management server that is a server, in which Enterprise Resource Planning (ERP) runs, and provides various kinds of data via a communication network in response to a request from a mobile terminal used by a user, and a mobile terminal management program installed in the mobile terminal management server.

### Background Art

Heretofore, one so-called ERP (Enterprise Resource Planning) has become mainstream as package software for establishing a core business system for a company. In a core business system (an integrated core business system or an ERP system) in which this ERP is contained, it is most often constructed on a relational database, and design of an application program that focuses on business processes is mostly made. Thus, it is often operated without focusing on a report output.

For the purpose of processing the large amount of business data at a high speed, analyzing the business data from various angles, and outputting reports under such a situation, various data warehouse systems that undertake a complementary role to the core business system have been provided (see Patent Literature 1).

In report inquiry systems that are designed to output a report, ones that provide information on a report or the like to a mobile communication terminal (a mobile terminal) have been proposed (see Patent Literatures 2 and 3).

### Prior Art Literature

### Patent Literature

Patent Literature 1: Japanese Patent Application Publication No. 2002-312208
Patent Literature 2: Japanese Patent Application Publication No. 2003-323582
Patent Literature 3: Japanese Patent Application Publication No. 2007-200136

### Summary of the Invention

### Problems to be solved by the Invention

In the report inquiry system that provides information on a report or the like to the mobile communication terminal, there is a convenience capable of acquiring information even while a user is out or moving, but there is a problem in that operability is not considered. In the ERP system that provides information on a report or the like to the mobile communication terminal, there are many types of reports to deal with, and thus it is difficult to improve operability of the mobile communication terminal.

On the other hand, a conventional ERP system respectively registers data (containing data inputted by a user and data calculated from various kinds of data) acquired in each business process in dedicated data tables (tables) and manages the registered data. Namely, in the conventional ERP system, a table to be updated is different from the others for every input process such as a received order and a shipment instruction. In this regard, the "input process" means a process to input various kinds of data acquired (or determined) by a manager of the ERP system into the respective tables in the business processes.

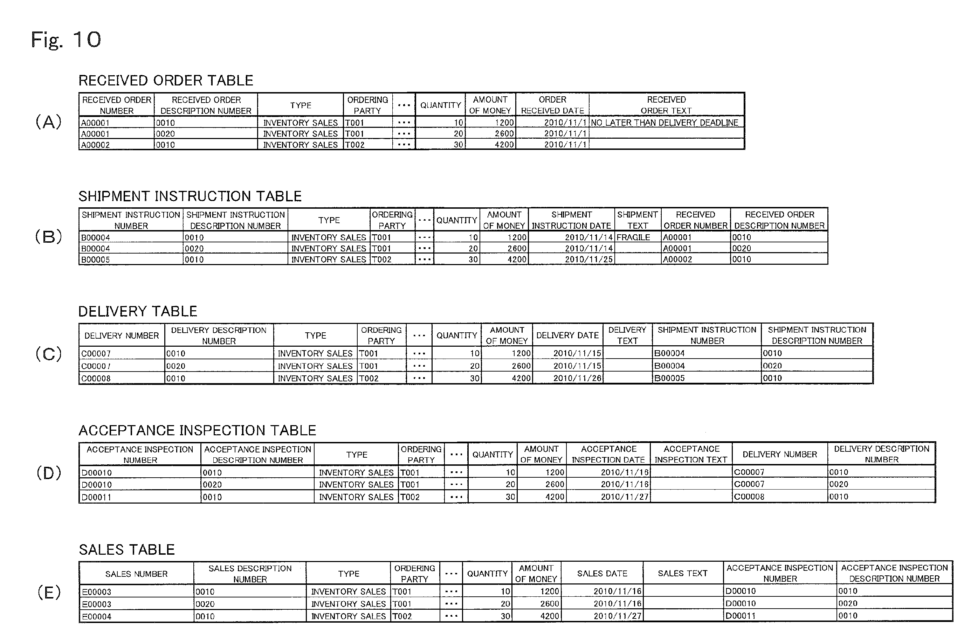

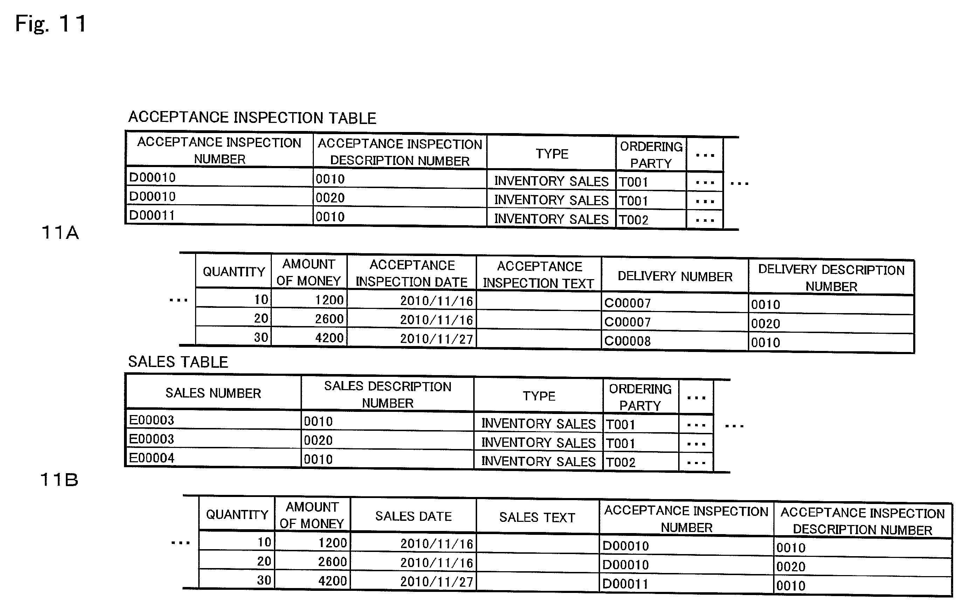

FIGS. 10 and 11 are explanatory drawings explaining an example of a table configuration in a conventional ERP system. For example, in the case where a business flow (process flow) constituted by a plurality of business processes denotes "inventory sales", there are five input processes including a received order, a shipment instruction, delivery, acceptance inspection, and sales. In this case, there are five tables for storing data on the process flow of the "inventory sales", including a received order table, a shipment instruction table, a delivery table, an acceptance inspection table and a sales table for each of the input processes, for example, as shown in FIGS. 10A to 10C, FIGS. 11A and 11B.

Namely, in the conventional ERP system, the tables updated for every input process have been different from each other. For that reason, association among a plurality of business processes that belong to the same process flow has been carried out by applying an identifier (in FIGS. 10 and 11, a received order number and received order description in the shipment instruction table, a shipment instruction number and shipment instruction description in the shipment table, and the like) to the data (process data) regarding the respective business processes.

For that reason, in the conventional ERP system, specification of a table according to a kind of input process and an input of an identifier for other corresponding process data have been required for one input process. Namely, for example, in the case where process data regarding a business process "shipment instruction" related to process data specified by a received order number "A00001" and a received order description number "0010" (that is, various kinds of data stored in the same row as the received order number "A00001" and the received order description number "0010" in the received order table) are registered in a database included in the ERP system as shown in FIGS. 10 and 11, there is a need to register the received order number "A00001" and the received order description number "0010" in the shipment instruction table as the process data regarding the business process "shipment instruction" in addition to a shipment instruction number and a shipment instruction description number for specifying the process data, a type indicating a kind of business process, and data indicating the content of the business process (for example, a sold-to party, quantity, the amount of money, shipment instruction date, a shipment text and the like). This is a problem in view of effective data processes (for example, data a part of which is the same (for example, a sold-to party or quantity, the amount of money, or the like) are registered in the plurality of tables.

Then, in the conventional ERP system, as well as the case where data are registered, in the case where data are searched from various kinds of data stored in various tables in response to a request of the user, for example, it is necessary to search for necessary process data by tracing an identifier of process data and to acquire data matching a search condition from various tables separately. For this reason, there has been a problem that a processing load required for a search increases excessively.

It is an object of the present invention to resolve the problems described above and to reduce a processing load required for a search of data in a business system and improve operability of a search operation of a mobile communication terminal in a business system (an ERP system) that provides information on a report to a mobile communication terminal.

### Means for Solving the Problems

According to the present invention, there is provided a mobile terminal management server for providing various kinds of data to a mobile terminal used by a user via a communication network in response to a request from the mobile terminal, the mobile terminal management server being a server in which ERP runs, the mobile terminal management server including: a report data storage section for storing report data generated for each business unit in a business process; a search condition designation screen providing section that provides a search condition designation screen used to designate a search condition in response to the request from the mobile terminal; a search condition receiving section that receives a search condition designated through the search condition designation screen from the mobile terminal, the search condition including a search condition representing code information taken in the mobile terminal; a report data searching section that searches for report data satisfying the search condition received by the search condition receiving section by referring to the report data storage section; and a search result providing section that provides search result data to the mobile terminal as a search result, the search result data representing the report data searched by the report data searching section, wherein a selection item arrangement circle display region is provided on the search condition designation screen to display a selection item arrangement circle in which a plurality of selection items selectable to designate a search condition are arranged substantially on a circumference thereof.

By configuring it as described above, in a business system that provides information on a report to a mobile communication terminal, it is possible to reduce a processing load required for a search of data in the business system and improve operability of a search operation of the mobile communication terminal.

For example, a selection item rotation rendering setup is made in the selection item arrangement circle display region so that selection item rotation rendering in which the plurality of selection items are rotationally moved on the circumference of the selection item arrangement circle is carried out in accordance with a predetermined rotation instruction operation of the mobile terminal by the user.

For example, a plurality of selection item arrangement circle display regions are provided on the search condition designation screen.

It may be configured so that the plurality of selection item arrangement circle display regions are set up so that a part of the selection item arrangement circle display regions is partially superimposed, and the selection items arranged on the selection item arrangement circle displayed in each of the selection item arrangement circle display regions are configured to have a display form different from that of any other selection item arrangement circle.

It may be configured so that the plurality of selection item arrangement circle display regions are provided on the search condition designation screen for every predetermined class; selection items arranged substantially on a circumference of a first selection item arrangement circle displayed in a first selection item arrangement circle display region are report type selection items used to designate one or more report type as a search condition; selection items arranged substantially on a circumference of a second selection item arrangement circle displayed in a second selection item arrangement circle display region are detailed condition selection items used to designate one or more detailed condition among detailed conditions including at least one of a date, a customer, and an organization as a search condition; the search condition receiving section receives the search condition including the report type designated through the search condition designation screen and at least one of the detailed conditions from the mobile terminal; and the report data searching section searches for report data that have the designated report type and satisfy the designated detailed condition in accordance with the search condition received by the search condition receiving section.

It may be configured so that selection items arranged substantially on a circumference of a third selection item arrangement circle displayed in a third selection item arrangement circle display region are detailed condition selection items used to designate one or more business process as a search condition; the search condition receiving section receives the search condition including the business process designated through the search condition designation screen from the mobile terminal; and the report data searching section searches for report data of the designated business process in accordance with the search condition received by the search condition receiving section.

It may be configured so that a search keyword input region used to input a search keyword is provided on the search condition designation screen; the search condition receiving section receives the search condition including a search keyword inputted into the search keyword input region from the mobile terminal; and the report data searching section searches for report data that satisfy the search condition further including the search keyword received by the search condition receiving section.

For example, the code information is taken in the mobile terminal by reading out a code attached to predetermined goods by means of a code reader function with which the mobile terminal is provided.

It may be configured so that: the code information is information by which item goods of the predetermined goods can be specified; the search condition represented by the code information is the item goods; and the report data searching section searches for report data containing item goods data representing the item goods of the predetermined goods.

Further, according to the present invention, there is provided a mobile terminal management program for causing ERP to run and causing a mobile terminal management server to carry out a process to provide various kinds of data to a mobile terminal used by a user via a communication network in response to a request from the mobile terminal, the mobile terminal management program causing the mobile terminal management server, provided with a report data storage section for storing report data generated for each business unit in a business process, to execute: a search condition designation screen providing process to provide a search condition designation screen used to designate a search condition in response to the request from the mobile terminal, a selection item arrangement circle display region being provided on the search condition designation screen to display a selection item arrangement circle in which a plurality of selection items selectable to designate a search condition are arranged substantially on a circumference; a search condition receiving process to receive a search condition designated through the search condition designation screen from the mobile terminal, the search condition including a search condition representing code information taken in the mobile terminal; a report data searching process to search for report data satisfying the search condition received in the search condition receiving process by referring to the report data storage section; and a search result providing process to provide the report data searched in the report data searching process as a search result.

### Effects of the Invention

According to the present invention, in a business system that provides information on a report to a mobile communication terminal, it is possible to reduce a processing load required for a search of data in a business system and improve operability of a search operation of a mobile communication terminal.

### Brief Description of the Drawings

FIG. 1 is a block diagram showing a configuration example of a report inquiry system.
FIG. 2 is a block diagram showing a configuration example of a mobile terminal management server.
FIG. 3 is an explanatory drawing showing an example of a storage state of process flow data.
FIG. 4 is a flowchart showing an example of a slip data providing process.
FIG. 5 is an explanatory drawing showing an example of a menu screen.
FIG. 6 is an explanatory drawing showing an example of a slip search screen.
FIG. 7 is an explanatory drawing showing an example of the slip search screen.
FIG. 8 is an explanatory drawing showing an example of an overall configuration of a selection item arrangement circle displayed on a slip search screen.
FIG. 9 is an explanatory drawing showing an example of a search result list display screen.
FIG. 10 is an explanatory drawing for explaining an example of a table configuration in a conventional ERP system.
FIG. 11 is an explanatory drawing for explaining an example of a table configuration in the conventional ERP system.

### Mode for Carrying out the Invention

Hereinafter, an embodiment of the present invention will be described with reference to the drawings.

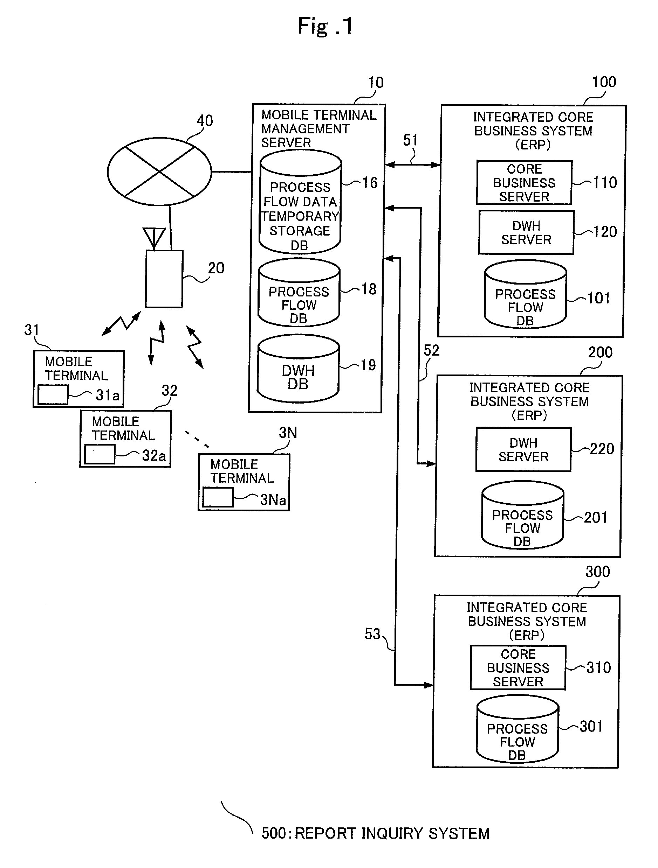

FIG. 1 is a block diagram showing a configuration example of a report inquiry system 500 according to one embodiment of the present invention. As shown in FIG. 1, the report inquiry system 500 includes a mobile terminal management server 10, a relay apparatus 20, a plurality of mobile terminals 31 to 3N (N is an arbitrary positive integer), an integrated core business system 100, an integrated core business system 200, and an integrated core business system 300.

The mobile terminal management server 10 is connected to each of the mobile terminals 31 to 3N via a communication network 40, such as the Internet, and the relay apparatus 20. The mobile terminal management server 10 is connected to the integrated core business system 100, the integrated core business system 200 and the integrated core business system 300 via communication networks 51, 52, and 53, such as a LAN (Local Area Network) or a dedicated communication line, respectively. In this regard, the mobile terminal or the integrated core business system may be configured so as to be capable of communicating with any other mobile terminal or any other integrated core business system via the mobile terminal management server, respectively, or the mobile terminal or the integrated core business system may be configured so as not to be capable of communicating with any other mobile terminal or any other integrated core business system, respectively.

The integrated core business system 100 includes a core business server 110, a data warehouse server (DWH server) 120 and a process flow DB 101. The integrated core business system 200 includes a DWH server 220 and a process flow DB 201. The integrated core business system 300 includes a core business server 310 and a process flow DB 301.

Each of the plurality of the integrated core business systems 100, 200 and 300 each having a different configuration fulfils a function as an integrated core business system by carrying out communication (transmission and reception of various kinds of information) with the mobile terminal management server 10 if necessary (that is, in accordance with a function that each system has). In other words, in the report inquiry system, even the system 200 having no core business server or the system 300 having no DWH server can also fulfill the function of the integrated core business system by carrying out communication with the mobile terminal management server 10. Although it has not been shown in the drawings, even a system having no process flow DB can also fulfill the function of the integrated core business system by storing process flow data in the mobile terminal management server 10. Since a known technique is used for the core business server or the like included in each core business system, the following description will be made using the integrated core business system 100 as an example.

The core business server 110 is connected to the DWH server 120 through a dedicated communication line.

The core business server 110 is a server managed by a manager of the report inquiry system 500, for example, and has various functions to manage report information on various kinds of businesses (for example, functions to create, update and save information). The core business server 110 is configured by a general information-processing apparatus provided with an OS (Operating System) and a relational DB.

Here, the report is the general term of books and a type of slip. Further, the books denote one in which matters concerning accounts of money or goods are filled, and the slip denotes data that become a basis for creating books and constitute evidence of transactions and the like on a business. In the present embodiment, the case where the core business server 110 deals with the process data representing only the slip data as report data will be described as an example.

The core business server 110 carries out various kinds of processes in accordance with a business application program. There are a sales business management program, a sales business management program, a production management program, a financial accounting management program, a managerial accounting management program and the like as the business application programs, for example.

The DWH server 120 is a server managed by a system manager of the present system, for example, and has various kinds of functions for realizing a data warehouse. Here, the data warehouse denotes a system to analyze the association among the individual items from among business data such as report data accumulated in time series. Further, the DWH server 120 has a function to register various kinds of data in a predetermined storage region (a business related data DB 101b, which will be described later) by converting a file with a CSV format transferred from the core business server 110 into a predetermined data format and the like. In this regard, the DWH server 120 may be configured to extract data according to the respective storage regions from a state of the CSV format without carrying out conversion of the data format.

The process flow DB 101 is a storage medium for storing process flow data configured by various kinds of process data (or report data) collected and marshaled by means of various kinds of information processing using various kinds of programs stored in a business application program DB (not shown in the drawings) of the core business server 110. The process flow data will be described later in detail. In the present embodiment, the integrated core business system 100 includes a business related data DB (not shown in the drawings) managed by the DWH server 120, and the core business server 110 has a function to convert process data stored in the process flow DB 101 into a CSV format in accordance with a predetermined extraction condition and a function to transmit the process data to the mobile terminal management server 10. In the present embodiment, the core business server 110 transfers a data file whose format is converted into the CSV format to the mobile terminal management server 10 by means of FTP (File Transfer Protocol).

The mobile terminal management server 10 is a server, in which ERP runs, which provides various kinds of data via a communication network in response to a request from the mobile terminal used by the user. The mobile terminal management server 10 is configured by an information-processing apparatus such as a WWW server, for example, and managed by the system manager of the report inquiry system 500.

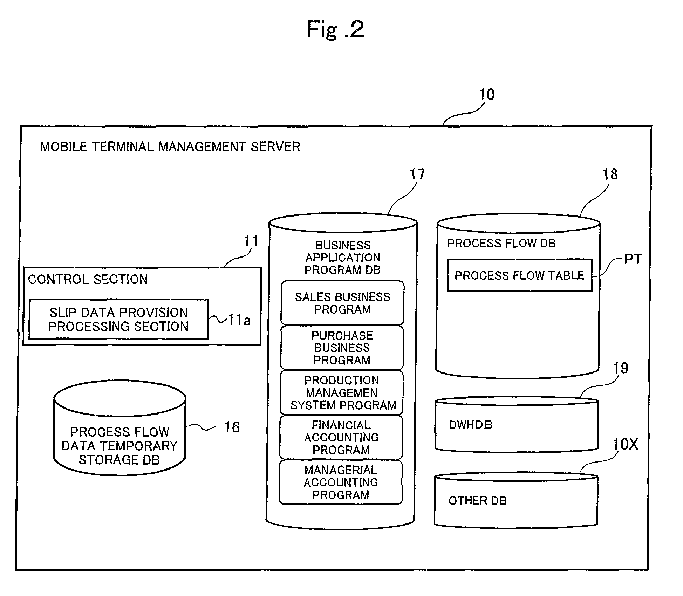

FIG. 2 is a block diagram showing a configuration example of the mobile terminal management server 10. As shown in FIG. 2, the mobile terminal management server 10 includes a control section 11 that carries out various kinds of control, a process flow data temporary storage DB 16, a business application program DB 17, a process flow DB 18, a DWH DB 19, and the other DB 10X for storing various kinds of data (for example, data used by various kinds of programs stored in the business application program DB 17) necessary to implement the function of the general core business server. In this regard, since the other DB 10X is a portion with no relationship to the present invention in particular, detailed explanation thereof is omitted. The control section 11 includes a slip data provision processing section 11a that carries out, for example, a process to provide process flow data to the mobile terminals 31 to 3N.

The process flow data temporary storage DB 16 is a storage medium for temporarily storing process flow data acquired from the integrated core business system 100 side and process flow data stored in the process flow DB 18. The process flow data stored in the process flow data temporary storage DB 16 are updated, for example, at regular intervals (for example, at one-day intervals, at three-day intervals, or at 12-hour intervals).

The business application program DB 17 is a storage medium for storing a program used for various kinds of businesses. There are a sales business management program, a purchase business management program, a production management program, a financial accounting management program, and a managerial accounting management program as the programs stored in the business application program DB 17, for example.

The process flow DB 18 is a storage medium for storing process flow data configured by various kinds of process data (or report data) collected and marshaled by means of various kinds of information processing using various kinds of programs stored in the business application program DB 17. In the present embodiment, the case where process flow data containing various kinds of data related to a process flow including a plurality of business processes are stored in a process flow table PT of the process flow DB 18 will be described. Further, in the present embodiment, the case where the mobile terminal management server 10 centrally manages the process flow data generated in each process flow at one process flow table PT will be described. In this regard, in the present embodiment, generally used slip data (for example, data, in which received order slip header information, received order slip description information, delivery date schedules and the like are associated with slip data corresponding to a received order slip, stored with a structure in which data can be searched based on a key such as a slip number (here, the slip number includes a received order number, a purchase order number, a shipment number, an acceptance or delivery numbers, a bill reference, a billing number, an accounting number and the like.) are contained in the process flow data.

In this regard, the mobile terminal management server 10 may be configured so as to manage, using a plurality of tables, the process flow data for every type (which will be described later) or for whatever a part of the content of common data (for example, a sold-to party) or the like, will be described later) is the same, for example.

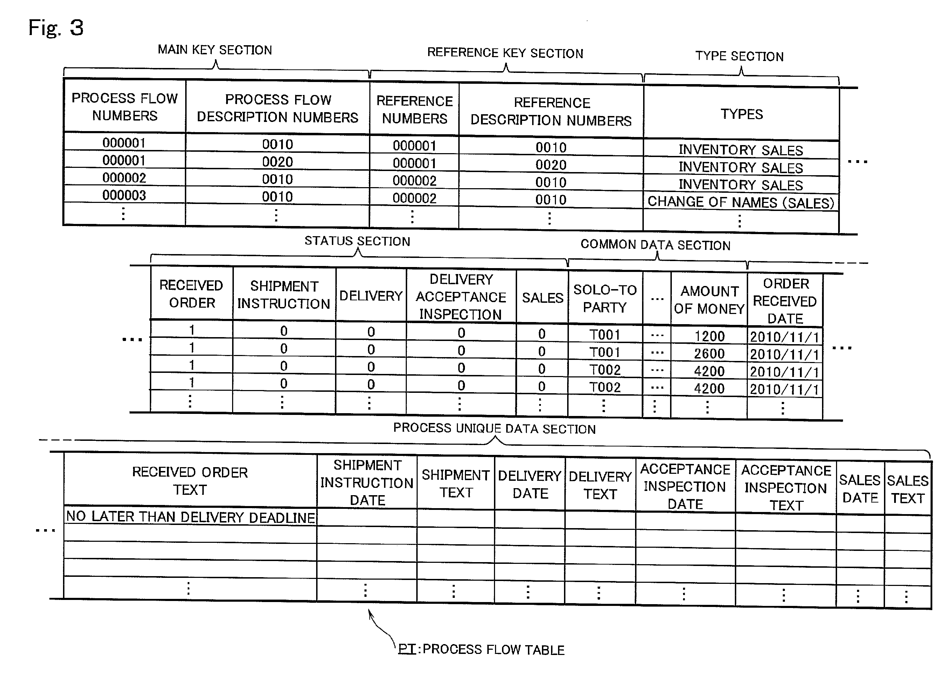

FIG. 3 is an explanatory drawing showing an example of a storage state of process flow data in the process flow DB 18. As shown in FIG. 3, the process flow data according to the present embodiment contain: a main key section; a reference key section; a type section; a status section; a common data section; and a process unique data section. In this regard, items corresponding to the respective sections of the process flow data (that is, the respective column items in the process flow table PT) denote the kinds of process data that constitute the process flow data. Namely, the data regarding each of the business processes that constitute the process flow are assigned to the respective sections that constitute the process flow data and stored. In this regard, process data regarding one process flow (for example, a series of process flow from a received order from a company to delivery) are stored in the same entry of the process flow table PT (that is, the same line in the process flow table PT). By configuring it in this manner, it is possible to define a correspondence relationship among the respective process data.

Here, the "main key section" is a portion in which main key data that are data for uniquely specifying process flow data are stored among the process flow data. In the present embodiment, the main key section is constructed by a process flow number and a process flow description number. Namely, in the present embodiment, a combination of the process flow number and the process flow description number becomes an identifier (ID) of each of the process flow data. The main key section is updated at the first registration of the process flow. In this regard, the word "at the first registration of the process flow" herein means the time when entry (data line) is added to the process flow data, for example, the time when unregistered process data that are other corresponding process data belonging to a certain process flow are registered. Further, the "update" herein includes addition of data.

In this regard, the "process flow number" is an identifier for specifying one process flow data (that is, one line in the process flow table PT shown in FIG. 2). The process flow number is applied to process data whose predetermined items are the same as each other. In the present embodiment, as the process flow number, the same number is to be applied to process flow data whose type and ordering party are the same in the process flow data.

Further, the "process flow description number" is an identifier for specifying specific process flow data from among the process flow data to each of which the same process flow number is applied. Namely, for example, in the process flow table PT shown in FIG. 3, it is possible to uniquely specify process flow data containing process data, which indicate that an order for businesses with the amount of money "1200" and "2600" is received from a sold-to party "T001", in a business process "received order" of a type "inventory sales" of the process flow by means of a combination of a process flow number "000001" and a process flow description number "0010" or "0020".

Subsequently, the "reference key section" is a portion in which reference key data that are data for specifying other process flow data (or other process data) related to the process flow, such as an original transaction with respect to returned goods of sales, in the process flow data are stored. In the present embodiment, the reference key section is configured by a reference number and a reference description number. The reference key section is updated at the first registration of the process flow.

In this regard, a process flow number and a process flow description number of other process flow related to the process flow are stored in the reference number and the reference description number, respectively. However, in the case where there is no other process flow related to the process flow, such as the case of a new transaction, data indicating the same value as the main key section of the same entry are stored in the reference key section (that is, the process flow number and the process flow description number are respectively stored in the reference number and the reference description number). Further, in the case where the reference key section indicates other process data related to the process flow, data for specifying a kind of process data are further provided in the reference key section.

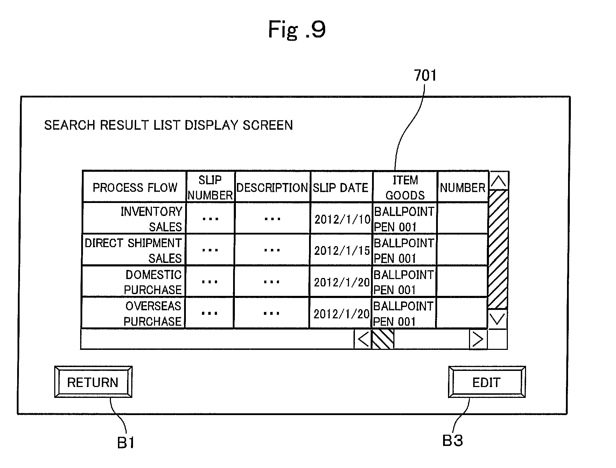

Further, the "type section" denotes a portion in which type data that are data indicating a kind of the process flow such as inventory sales or sample shipment among the process flow data are stored. The type section is updated at the first registration of the process flow. In this regard, the kind of process flow is not limited to inventory sales or sample shipment. Further, it is determined what process is necessary in advance for every kind of process flow (that is, the kinds and the number of business processes included in the kind of process flow are different). In this regard, other plural kinds of process flows will be presented later (see FIG. 9).

Further, the "status section" is a portion in which status data that are data of process flow data representing progress of a process flow (that is, data indicating a progress situation of each of a plurality of business processes included in the process flow) are stored. In the present embodiment, as the status data, with respect to business processes required by the process flow, "0" is set to uncompleted ones, and "1" is set to completed ones, thereby indicating progress of each of the business processes. Namely, for example, in the case where business processes included in a process flow of "inventory sales" are a "received order", "shipment", "delivery", "delivery acceptance inspection" and "sales" as shown in FIG. 3, process unique data (for example, order received date) regarding the business process "received order" are registered. In this case, as the status data, "1" is set to a portion corresponding to "sales", and the other portions remain as an initial state (that is, a state in which "0" is set up).

Namely, the status section according to the present embodiment is updated for each of the business processes. In other words, when process unique data (will be described later) are inputted, more specifically, when it is determined that each of the business processes is completed on the basis of satisfaction of a predetermined status changing condition, the status section is updated. In this regard, although the status changing condition is not limited in particular, in the present embodiment, a condition that "all of process unique data corresponding to one business process are inputted" is stored in a predetermined storage region of the mobile terminal management server 10 as the status changing condition.

In this regard, in the present embodiment, since different kinds of process flows are stored in the same table, a portion in which unnecessary process data are stored may be generated in a specific process flow of items (line items) that constitute tables. In this case, in the process flow table, a portion in which the unnecessary process data are stored becomes blank data, and "0" is stored in the status data corresponding to the blank data.

Further, the "common data section" is a portion in which common data that are data independent of the business processes of the process flow data, such as a sold-to party and a shipment address, (that is, data common among the business processes included in the same process flow) are stored. The common data section is updated at the first registration of the process flow.

Further, the "process unique data section" is a portion in which process unique data that are unique data for each of the business processes included in the same process flow, such as data registered in the order received date and each of the business processes of the process flow data (for example, text data indicating a precaution statement such as "No later than delivery deadline" or "Fragile (Be careful with fragile items)") and the like, are stored. The process unique data section is updated for every business process. Therefore, in the present embodiment, ones dependent upon each business process are the "process unique data" and ones independent from any business process are "common data" of the process flow data.

The above is explanation regarding the process flow data according to the present embodiment. Here, definition of various kinds of terms shown in FIG. 3 will be explained briefly.

First, the "received order" means a state that an order is received from a customer and a contract is made with the customer. Further, the "shipment instruction" means a state that an instruction to ship out goods is carried out to a warehouser or a person for distribution of the goods. Further, the "delivery" means a state that the goods are shipped out from a warehouse and its movement is started. Further, the "acceptance inspection" means a state that acceptance inspection by the customer is completed and ownership of the goods is shifted to the customer. Further, the "sales" means a state that the acceptance inspection by the customer is confirmed and the amount of claims to the customer is determined (= a claim is posted).

Further, the term "acceptance inspection" is also used in the sense of a "business to inspect whether incoming goods or service has a specification as ordered (= quantity, a color or a shape and quality as ordered) or not" or in the sense that "ownership of assets is shifted at completion of the acceptance inspection". In this regard, in order to make clear timing of shift of the ownership of the assets, an event "acceptance inspection" is defined in distinction from delivery on financial accounting (or on legal financial accounting) or on the ERP system.

The mobile terminal management server 10 has a function to provide various kinds of data stored in the process flow DB 18 and the other DB 10X in response to a request from a predetermined external device, that is, a request from the mobile terminals 31 to 3N and the integrated core business systems 100, 200, and 300 in the present embodiment. In other words, the mobile terminal management server 10 has a function as the core business server. In other words, the mobile terminal management server 10 includes an ERP engine.

Even though it has not been shown in the drawings, in the present embodiment, the mobile terminal management server 10 is assumed to have a function as a DWH server having various functions of implementing a data warehouse. As the mobile terminal management server 10 has a structure of functioning as the ERP engine and the DWH server, it is possible to provide information requested as the integrated core business system to the integrated core business systems having different configurations (for example, the integrated core business system 100 including core the business server and the DWH server, the integrated core business system 200 including only the DWH server, and the integrated core business system 300 including only the DWH server).

Each of the mobile terminals 31 to 3N is an information-processing apparatus including a CPU (Central Processing Unit), a ROM, a RAM, a display section and the like, such as an Ipad (registered trademark), for example. In the present embodiment, each of the mobile terminals 31 to 3N has various kinds of applications available to deal with the report data, such as a Web browser. Further, in the present embodiment, each of the mobile terminals 31 to 3N has a function to define a query (a search item, a search key, an extract key and the like) for acquiring necessary report data (in the present embodiment, the process flow data) from the mobile terminal management server 10 in response to an operation input by a user, for example, and a function to transmit the defined query to the mobile terminal management server 10. Further, the mobile terminals 31 to 3N include code readers (or code reader functions) 31a to 3Na for reading out various kinds of codes such as a QR code (Quick Response Code: which is a registered trademark), respectively.

In the present embodiment, each of the mobile terminals 31 to 3N has a function to communicate with the mobile terminal management server 10 via the relay apparatus 20 and the communication network 40, and a function to output the data acquired from the mobile terminal management server 10 to the display section by means of a function of software such as a predetermined Web application (Web browser), for example.

Here, a process to update the process flow data stored in the process flow data temporary storage DB 16 will be described. In the present embodiment, when data update timing (for example, a predetermined time defined in advance (at 2:00 am or the like) in case of updating them every day) comes, the mobile terminal management server 10 reads out the process flow data (which become latest data) stored in the process flow DB 18 included in the mobile terminal management server 10; stores (newly stores or overwrites) the process flow data in a predetermined storage region of the process flow data temporary storage DB 16; and updates storage information of the process flow data temporary storage DB 16. Thus, the storage information of the process flow data temporary storage DB 16 is updated by a batch process.

Next, an operation of the report inquiry system 500 according to the present embodiment will be described with reference to the drawings. In this regard, the content of operations and processes with no relationship to the present invention particularly may be omitted.

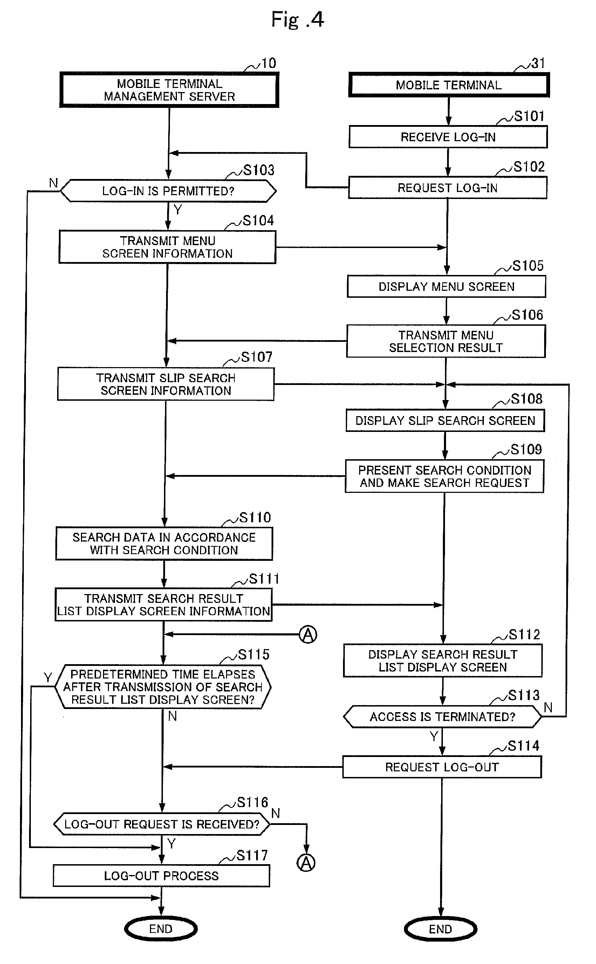

FIG. 4 is a flowchart showing an example of a slip data providing process carried out by the mobile terminal management server 10 and the like in the report inquiry system 500 according to the present embodiment. Here, the case where the mobile terminal management server 10 provides the process flow data in response to a request from a mobile terminal 31 used by a user X will be described an example.

In the slip data providing process, the mobile terminal 31 first receives a log-in request by a log-in operation of the user X (Step S101). For example, an input operation of a personal identification number set up in advance is thought as this log-in operation. When log-in to the mobile terminal 31 is permitted, it is allowed to carry out various kinds of operations for utilizing various kinds of functions mounted on the mobile terminal 31.

In the case where a predetermined log-in operation is carried out by the user X when to log in the mobile terminal 31, the mobile terminal 31 accesses to the mobile terminal management server 10 to acquire a log-in screen, and designates information (for example, a user ID and a password which are set up in advance) necessary to log in on the log-in screen to carry out a log-in request (Step S102). For example, this log-in request is carried out by presenting predetermined information (for example, an electronic certificate issued to the user X) used for log-in determination defined in advance in addition to the user ID and the password. In this regard, it may be configured so as to cause the user X to designate a group to which the user belongs and a language (for example, Japanese) used in various kinds of screens when to log in the mobile terminal management server 10.

When the log-in request is received, the mobile terminal management server 10 determines whether the log-in is permitted or not (Step S103). For example, this determination may be made based on an ID, a password, an electronic certificate and the like.

In the case where it is determined that the log-in is permitted ("Yes" at Step S103), the mobile terminal management server 10 sets the mobile terminal 31 to a log-in state. When the mobile terminal 31 is set to the log-in state, the mobile terminal management server 10 transmits menu screen information representing a menu screen to the mobile terminal 31 (Step S104). In this regard, in the case where it is determined that the log-in is not permitted to ("No" at Step S103), the mobile terminal management server 10 terminates the slip data providing process without setting the mobile terminal 31 to the log-in state. Further, in the case where it is determined that the log-in is not permitted, the mobile terminal management server 10 carries out a process to notify the mobile terminal 31 of that effect.

When the menu screen information is received, the mobile terminal 31 causes the display section included in the mobile terminal 31 to display the menu screen represented by the received menu screen information (Step S105).

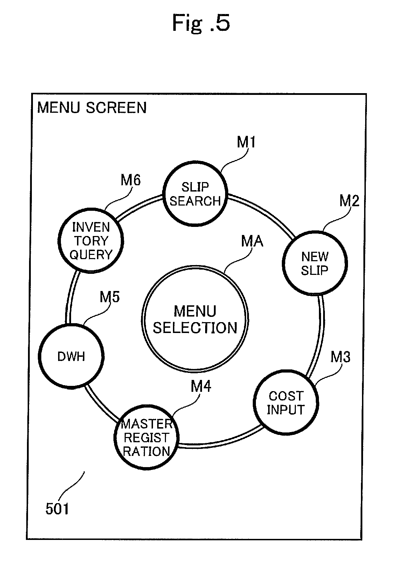

FIG. 5 is an explanatory drawing showing an example of a menu screen. As shown in FIG. 5, a menu arrangement circle display region 501 is provided on the menu screen. A menu arrangement circle MG in which menu buttons M1 to M6, on which a plurality of selectable menu names are respectively displayed, are arranged substantially on the circumference thereof is displayed on the menu arrangement circle display region 501. Further, as shown in FIG. 5, a title display region MA on which a title of the menu arrangement circle MC arranged at the central region of the circle formed by the menu arrangement circle MC is displayed is provided on the menu arrangement circle display region 501. Here, as the menu buttons M1 to M6, a slip search button M1 that is pushed down when to search for a slip, a new slip button M2 that is pushed down when to newly create a slip, a cost input button M3 that is pushed down when to input a cost, a master registration button M4 that is pushed down when to register a master, a DWH button M5 that is pushed down when to register data into the DWH DB 19, and an inventory query button M6 that is pushed down when to query inventory information are provided.

In the menu screen displayed on the display section of the mobile terminal 31 in which a touch panel is arranged, the user X pushes down any one of the menu buttons M1 to M6 through a touch operation (an operation to contact by means of a finger). In the present embodiment, the slip search button M1 is pushed down. In this regard, a process when any of the other menu buttons M2 to M6 are pushed down will be omitted herein.

When the slip search button M1 is pushed down in the menu screen, the mobile terminal 31 notifies the mobile terminal management server 10 of the fact that the slip search button M1 has been pushed down as a menu selection result (Step S106).

When the menu selection result representing the fact that the slip search button M1 is pushed down is received, the slip data provision processing section 11a of the mobile terminal management server 10 transmits the slip search screen information representing the slip search screen for designating a slip search condition to the mobile terminal 31 (Step S107).

When the slip search screen information is received, the mobile terminal 31 causes the display section included in the mobile terminal 31 to display the slip search screen represented by the received slip search screen information (Step S108).

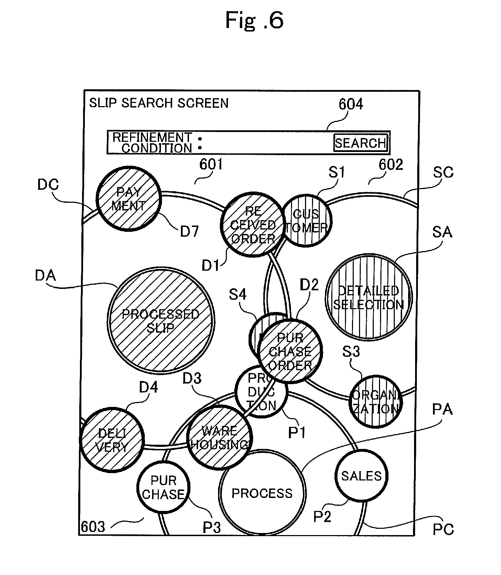

FIG. 6 is an explanatory drawing showing an example of the slip search screen. As shown in FIG. 6, a plurality of selection item arrangement circle display regions 601, 602 and 603 and a keyword input region 604 for inputting a keyword to be used as a refinement condition are provided on the slip search screen. In the plurality of selection item arrangement circle display regions 601, 602 and 603, a plurality of selection item arrangement circles DC, SC and PC on each of which a plurality of selection items selectable to designate a search condition are arranged substantially on the circumference thereof are displayed, respectively. In the present embodiment, as the selection item arrangement circles DC, SC and PC, a processed slip type selection item arrangement circle DC on which the types of processed slips are selectably displayed, a detailed selection type selection item arrangement circle SC in which the titles of detailed items for refinement are selectably displayed, and a process type selection item arrangement circle PC in which the types of business processes are selectably displayed are provided. Further, as the selection item arrangement circle display regions 601, 602 and 603, a processed slip type selection item arrangement circle display region 601 to display the processed slip type selection item arrangement circle DC, a detailed selection type selection item arrangement circle display region 602 to display the detailed selection type selection item arrangement circle SC, and a process type selection item arrangement circle display region 603 to display the process type selection item arrangement circle PC are provided.

On the processed slip type selection item arrangement circle DC, selection items (selection item buttons), which are arranged substantially on the circumference thereof, capable of selecting one slip from seven types of slips are arranged. The seven types of slips include: a received order button D1 for designating a received order slip as the search condition; a purchase order button D2 for designating a purchase order slip as the search condition; a warehousing button D3 for designating a warehousing slip as the search condition; a delivery button D4 for designating a delivery slip as the search condition; a sales button D5 for designating a sales slip as the search condition; a billing button D6 for designating a billing slip as the search condition; and a payment button D7 for designating a payment slip as the search condition. Further, a class display button DA on which a class name "processed slip" is displayed is arranged on the central region of the processed slip type selection item arrangement circle DC. In the present embodiment, the corresponding type of slip can be searched for by selection of the selection items (selection item buttons) D1 to D7 (one button may be selected or plural buttons may be selected).

On the detailed selection type selection item arrangement circle SC, selection items (selection item buttons), which are arranged substantially on the circumference thereof, capable of selecting one from four types of detailed refinement condition items are arranged. The four types of detailed refinement condition items include: a customer button S1 for designating a customer as the search condition; a supplier button S2 for designating a supplier as the search condition; an organization button S3 for designating an organization as the search condition; and an item goods button S4 for designating item goods as the search condition. Further, a class display button SA on which a class name "detailed selection" is displayed is arranged on the central region of the detailed selection type selection item arrangement circle SC. In the present embodiment, when the selection items (selection item buttons) S1 to S4 are selected (one button may be selected or plural buttons may be selected), a detailed refinement condition designation screen (not shown in the drawings) for designating a concrete refinement condition is displayed, and a concrete refinement condition (for example, which corresponds to a supplier company name when the customer button S1 is selected, an item goods number when the item goods button S4 is selected, and the like) can be designated through the detailed refinement condition designation screen. The slip that satisfies the designated refinement condition can be searched for by selection using the concrete refinement condition (one condition may be selected or plural conditions may be selected).

On the process type selection item arrangement circle PC, selection items (selection item buttons), which are arranged substantially on the circumference thereof, capable of selecting one business process from three types of business processes are arranged. The three types of business processes include: a production button P1 for designating "production" in the business process as the search condition; a sales button P2 for designating "sales" in the business process as the search condition; and a purchase button P3 for designating "purchase" in the business process as the search condition. Further, a class display button PA on which a class name "process" is displayed is arranged on the central region of the process type selection item arrangement circle PC. In the present embodiment, a slip related to the corresponding type of business process can be searched for by selection of the selection items (selection item buttons) P1 to P3 (one button may be selected or plural buttons may be selected).

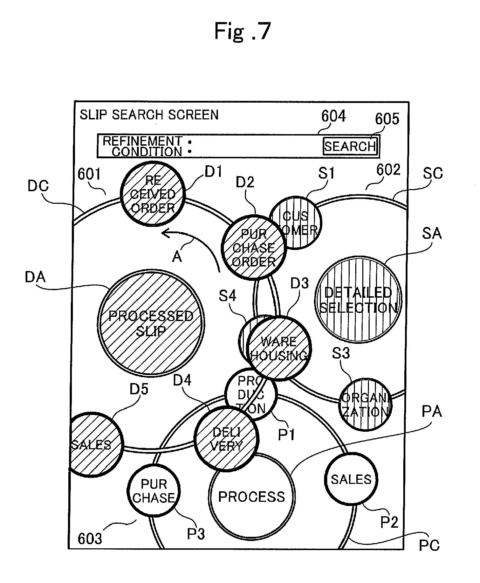

In the present embodiment, when the class display button DA, SA or PA is pushed down, rendering in which the corresponding selection item arrangement circles DC, SC or PC rotates is carried out. In other words, in the present embodiment, a selection item rotation rendering setup (a setup by a computer program) is made in the selection item arrangement circle display regions 601, 602 and 603 on the slip search screen so that selection item rotation rendering in which the plurality of selection items in the corresponding selection item arrangement circle DC, SC or PC are rotationally moved on the circumference thereof can be carried out in accordance with a predetermined rotation instruction operation (an operation of pushing down the class display button DA, SA or PA) of the mobile terminal 31 by the user X. More specifically, in the case where the class display button DA is pushed down in a screen state shown in FIG. 6, for example, selection item rotation rendering in which the plurality of selection items in the selection item arrangement circle DC rotates in a counterclockwise direction (in a direction A in FIG. 7) on the circumference is carried out. In this case, the rotational direction may be changed in accordance with a predetermined rotation direction changing operation by the user X (an operation to touch the vicinity of a portion of the screen, at which the circle formed by the selection item arrangement circle DC is displayed, with a finger and to slide the touched finger in a new rotational direction). In this regard, it may be configured so that the selection item rotation rendering is terminated in the case where the class display button DA, SA or PA is pushed down again.

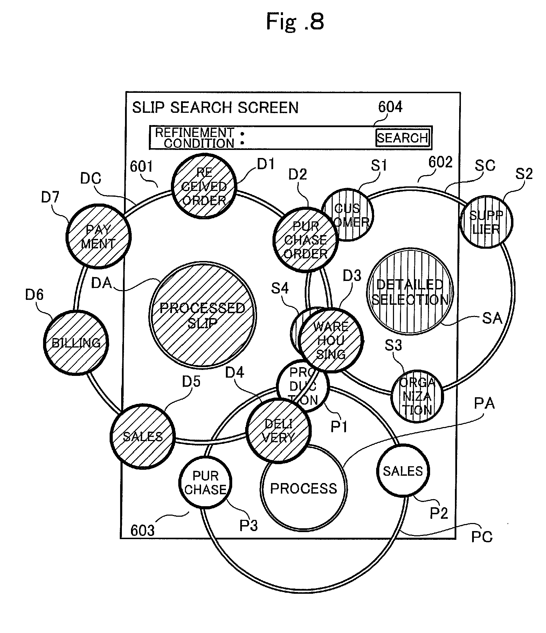

Since the selection item rotation rendering is carried out as described above, each of the selection item arrangement circles DC, SC and PC may be arranged so as not to fall within the screen as shown in FIG. 8. Even in the case where a part of the selection items arranged on each of the selection item arrangement circles DC, SC and PC is not displayed on the screen, all of the selection items can be sequentially displayed by causing the selection item arrangement circles DC, SC and PC to rotate. Further, since there is no need to simultaneously display all of the selection items arranged on each of the selection item arrangement circles DC, SC and PC within one screen, a display size of each of the selection items can be enlarged. In this regard, in the case where a screen size is large, it may be configured so that all of the selection items are simultaneously displayed within one screen.

In this regard, although each of the selection items arranged on each of the selection item arrangement circles DC, SC and PC is displayed in a circular frame in the present embodiment, a part or all of the selection items may be displayed in a frame of any other shape such as a rectangular shape, a triangular shape, and a star shape. Further, each of the selection items arranged on each of the selection item arrangement circles DC, SC and PC is just an example, and it may be another selection item.

In the example shown in FIG. 6, it has been configured so that the three selection item arrangement circle display regions 601, 602 and 603 are provided on the slip search screen. However, one selection item arrangement circle display region may be provided, or two or three or more selection item arrangement circle display regions may be provided.

Further, in the example shown in FIG. 6, the selection item arrangement circle display regions 601, 602 and 603 are set up so that a part of them is partially superimposed, and the selection items (selection item buttons) arranged on each of the selection item arrangement circles DC, SC and PC displayed in each of the selection item arrangement circle display regions 601, 602 and 603 are configured to have a display form different from that of any other selection item arrangement circles DC, SC and PC (for example, a different color). In this regard, any method may be used so long as it uses the different display form, and a display form may be differentiated by changing the shape or pattern thereof.

In the slip search screen, the user X selects each selection item arranged on each of the selection item arrangement circles DC, SC and PC by means of a touch operation. More specifically, the type of slip that is a search target is selected by selecting any one of the selection items (selection item buttons) D1 to D7 arranged on the processed slip type selection item arrangement circle DC. Further, on the slip search screen, the user X selects the title of a detailed item for refinement by selecting any one of the selection items (selection item buttons) S1 to S4 arranged on the detailed selection type selection item arrangement circle SC. In the case where any one of the selection items (selection item buttons) S1 to S4 is selected, a detailed condition for search is designated by inputting a concrete refinement condition on the detailed refinement condition designation screen. Further, in the slip search screen, the user X selects the type of business process that is a search target by selecting any one of the selection items (selection item buttons) P1 to P3 arranged on the process type selection item arrangement circle PC. Moreover, on the slip search screen, the user X designates a search keyword by inputting a keyword to be used as the refinement condition in the keyword input region 604.

In the present embodiment, in the case where the user X selects the item goods S4 among the selection items (selection item buttons) S1 to S4 arranged on the detailed selection type selection item arrangement circle SC on the slip search screen, the mobile terminal 31 causes the display section of the mobile terminal 31 to display the detailed refinement condition designation screen in which the item goods input region is provided. When the mobile terminal 31 reads out a code (for example, a QR code or a barcode) attached to goods by means of the code reader (or the code reader function) 31a provided on the mobile terminal 31 in response to an operation of the user X, the mobile terminal 31 displays an item goods number represented by the read-out code in the item goods input region. In the present embodiment, the item goods number can be inputted readily using the code reader (or the code reader function) 31a as described above.

In this regard, in the slip search screen, the user X may select or designate any one among a type of slip, a detailed condition for search, a business process that is a search target, and a search keyword, or may select or designate arbitrary plural ones among them. Further, in the slip search screen, the user X may select or designate multiple ones for each of the type of slip, the detailed condition for search, and the business process that is the search target.

When the selection or designation of the search condition is terminated on the slip search screen, the user X pushes down the search button 605 by means of a touch operation.

When the search button 605 is pushed down in a state in which the search condition is selected or designated, the mobile terminal 31 presents the selected or designated search condition to the mobile terminal management server 10, and makes a search request (Step S109).

When the search request is received, the mobile terminal management server 10 searches for slip data that match the search condition presented in response to the received search request by referring to the process flow data stored in the process flow data temporary storage DB 16 (Step S110).

When the slip data are searched for in accordance with the search condition, the mobile terminal management server 10 generates search result list display screen information representing a search result list display screen for displaying a list of the searched slip data as a search result, and transmits the search result list display screen information to the mobile terminal 31 (Step S111).

When the search result list display screen information is received, the mobile terminal 31 causes the display section included in the mobile terminal 31 to display the search result list display screen represented by the received search result list display screen information (Step S112).

FIG. 9 is an explanatory drawing showing an example of the search result list display screen. As shown in FIG. 9, a display region 701 for displaying the search result, a return button B1 pushed down to return to a previous screen, and an edit button B3 that is pushed down when to edit the search result are provided on the search result list display screen. In this regard, when a process flow type (inventory sales, direct shipment sales, or the like) is selected in the search result list display screen by means of a touch operation, the mobile terminal 31 transmits a request to acquire corresponding slip data to the mobile terminal management server 10. The mobile terminal management server 10 refers to the process flow data stored in the process flow data temporary storage DB 16 in response to the acquisition request of the slip data, and transmits the corresponding slip data to the mobile terminal 31. The mobile terminal 31 then displays the received slip data on the display screen of the display section.

In the case where the user X makes an operation to terminate the access such as an operation to terminate a browser on the search result list display screen ("Yes" at Step S113), the mobile terminal 31 makes a log-out request to the mobile terminal management server 10 (Step S114). In this regard, in the case where an operation to continue the access such as an operation to push down the return button B1 is made ("No" at Step S113), the mobile terminal 31 proceeds to the process at Step S108, and displays the slip search screen (see FIG. 6).

When the search result list display screen information is transmitted at Step S111, the mobile terminal management server 10 starts to measure time (standby time) in which an information exchange with the mobile terminal 31 is not carried out, and monitors whether a predetermined time (for example, five minutes, ten minutes, 30 minutes, and the like) elapses as the standby time or not (whether it has reached the predetermined time or not) (Step S115).

When a log-out request is received during measurement of the standby time ("Yes" at Step S116), the mobile terminal management server 10 stops measuring the standby time, and carries out a log-out process to release the log-in state (Step S117).

Further, in the case where it is determined that the predetermined time has elapsed as the standby time ("Yes" at Step S115), the mobile terminal management server 10 terminates measuring the standby time, and carries out the log-out process to release the log-in state (Step S117).

In the manner described above, it is determined whether or not the log-in to the mobile terminal management server 10 is permitted in response to the log-in request from the mobile terminal 31 that becomes operable by the log-in process. In the case where the log-in is permitted, a process to receive a provision request of process flow data and a process to provide the process flow data according to the request are carried out.

As described above, by setting the process flow data temporary storage DB 16 as a search target in the slip data providing process, the mobile terminal 31 needs not access a section functioning as the core business server in the mobile terminal management server 10 (more specifically, the business application program DB 17 and the process flow DB 18). For this reason, security can be improved when slip data are provided to the mobile terminal 31. In this regard, the process flow DB 18 may be set as the search target.

As explained above, in the embodiment described above, the mobile terminal management server 10, which is a server in which the ERP runs, for providing various kinds of data to the mobile terminals 31 to 3N used by the user via the communication network 40 in response to a request from the mobile terminals 31 to 3N is configured so as to: include the process flow table PT for storing the report data (for example, the process flow data) generated for each business unit in the business process; provide the search condition designation screen (for example, the slip search screen) used to designate the search condition, including the search condition represented by the code information taken in the mobile terminal, in response to the request from the mobile terminals 31 to 3N; receive the search condition designated through the search condition designation screen from the mobile terminals 31 to 3N; search for the report data that satisfy the received search condition by referring to the process flow table PT; and provide the search result data (the search result list display screen) representing the searched report data to the mobile terminals 31 to 3N as the search result, and so that the selection item arrangement circle display regions 601, 602 and 603 are provided on the search condition designation screen to display the selection item arrangement circles DC, SC and PC in each of which a plurality of selection items selectable to designate a search condition are arranged substantially on the circumference thereof. Therefore, in the business system that provides information on the report to the mobile communication terminal (the mobile terminals 31 to 3N), it is possible to reduce a processing load required for a search of data in a business system and improve operability of a search operation of the mobile communication terminal.

In other words, it is configured so as to: present, to the mobile terminals 31 to 3N, the search condition designation screen (for example, the slip search screen) provided with the selection item arrangement circle display regions 601, 602 and 603 for displaying the selection item arrangement circles DC, SC and PC in each of which the plurality of selection items selectable to designate the search condition are arranged substantially on the circumference thereof; and receive the search condition. Thus, it is possible to select or designate the search condition at the mobile terminals 31 to 3N side using the search condition designation screen on which the selection items are efficiently displayed to be selected easily as one screen. Therefore, it becomes possible to improve operability of the search operation of the mobile terminals 31 to 3N. Further, it may be configured so as to carry out the search in accordance with the search condition designated through the search condition designation screen and including the search condition represented by the code information taken in the mobile terminal. Therefore, it becomes possible to specify the search condition more readily, and this makes it possible to further improve operability of the search operation with the mobile terminals 31 to 3N.

Further, it is configured so as to search for the report data that satisfy the search condition by referring to the process flow table PT in which the report data (for example, the process flow data) generated for each business unit in the business process are stored. Therefore, it is possible to reduce a processing load required for a search of data in the business system.

Further, in the embodiment described above, it is configured so that the selection item rotation rendering setup is made in the selection item arrangement circle display regions 601, 602 and 603 so that the selection item rotation rendering in which the plurality of selection items on the selection item arrangement circles DC, SC and PC are rotationally moved on the circumference thereof is carried out in accordance with the predetermined rotation instruction operation of the mobile terminal 31 by the user (an operation to push down the buttons DA, SA and PA by means of the touch operation). Therefore, it is possible to more easily display the plurality of selection items on the selection item arrangement circles DC, SC and PC, and this makes it possible to simply select the selection item.

Further, in the embodiment described above, it is configured so that the plurality of selection item arrangement circle display regions 601, 602 and 603 are provided on the search condition designation screen (the slip search screen). Thus, it is possible to arrange the plurality of selection items in each of the plurality of selection item arrangement circles DC, SC and PC. Therefore, it becomes possible to display the selection items more visibly, and this makes it possible to readily select the selection item.

Further, in the embodiment described above, the plurality of selection item arrangement circle display regions 601, 602 and 603 are set up so that a part of the selection item arrangement circle display regions is partially superimposed, and the selection items arranged on each of the selection item arrangement circles DC, SC and PC displayed in each of the selection item arrangement circle display regions 601, 602 and 603 are configured to have a display form different from that of any other selection item arrangement circle. Therefore, it is possible to efficiently and visibly arrange the selection items in each of the selection item arrangement circles DC, SC and PC, and this makes it possible to readily select the selection item.

Further, in the embodiment described above, it is configured so that: the plurality of selection item arrangement circle display regions 601, 602 and 603 are provided on the search condition designation screen (the slip search screen) for every predetermined class; selection items arranged substantially on the circumference of a first selection item arrangement circle (the processed slip type selection item arrangement circle DC) displayed in a first selection item arrangement circle display region (the processed slip type selection item arrangement circle display region 601) are the report type selection items used to designate one or more report type as the search condition; selection items arranged substantially on the circumference of a second selection item arrangement circle (the detailed selection type selection item arrangement circle SC) displayed in a second selection item arrangement circle display region (the detailed selection type selection item arrangement circle display region 602) are the detailed condition selection items used to designate one or more detailed conditions among detailed conditions including at least one of a date, a customer, and an organization as the search condition; and the mobile terminal management server 10 receives the search condition including the type of report designated through the search condition designation screen and at least one of the detailed conditions from the mobile terminal 31, and searches for the report data that have the designated report type and satisfy the designated detailed condition in accordance with the received search condition. Therefore, it is possible to select or designate the search condition at the mobile terminal 31 side using the search condition designation screen on which the selection items are efficiently displayed to be selected easily as one screen, and this makes it possible to improve operability of the search operation in the mobile terminal 31.

Further, in the embodiment described above, it is configured so that: selection items arranged substantially on the circumference of a third selection item arrangement circle (the process type selection item arrangement circle PC) displayed on a third selection item arrangement circle display region (the process type selection item arrangement circle display region 603) are the detailed condition selection items used to designate one or more business process as the search condition; and the mobile terminal management server 10 receives the search condition including the business process designated through the search condition designation screen from the mobile terminal 31, and searches for the report data of the designated business process in accordance with the received search condition. Therefore, it is possible to select or designate the search condition at the mobile terminal 31 side using the search condition designation screen on which the selection items are efficiently displayed to be selected easily as one screen, and this makes it possible to improve operability of the search operation of the mobile terminal 31.

Further, in the embodiment described above, it is configured so that: the search keyword input region (the keyword input region 604) used to input the search keyword is provided on the search condition designation screen; and the mobile terminal management server 10 receives the search condition including the search keyword inputted into the search keyword input region from the mobile terminal 31, and searches for the report data that satisfy the search condition further including the received search keyword. Therefore, it is possible to select or designate the search condition at the mobile terminal 31 side using the search condition designation screen on which the selection items are efficiently displayed to be selected easily as one screen, and this makes it possible to improve operability of the search operation of the mobile terminal 31.

Further, in the embodiment described above, it is configured so that the code information is taken in the mobile terminal 31 by reading out a code attached to predetermined goods by means of the code reader function with which the mobile terminal 31 is provided, for example. Therefore, it becomes possible to specify the search condition more readily using the code reader function of the mobile terminal 31, and this makes it possible to improve operability of the search operation with the mobile terminals 31 to 3N.

Further, in the embodiment described above, it is configured so that: the code information is information by which item goods of the predetermined goods can be specified; the search condition represented by the code information is the item goods; and the mobile terminal management server 10 searches for report data containing item goods data representing the item goods of the predetermined goods. Therefore, it becomes more readily to specify the item goods of the predetermined goods as the search condition, and it is possible to specify the search condition readily. For this reason, it becomes possible to further improve operability of the search operation with the mobile terminals 31 to 3N.

Further, in the embodiment described above, the database (for example, the process flow DB 18) is configured so as to be provided in the process flow data management server (for example, the mobile terminal management server 10) that manages the process flow data generated for each process flow, and so that the process flow data management server provides, to a client, the report data searched by referring to the process flow data in response to the request from the client (for example, the mobile terminals 31 to 3N or the integrated core business systems 100, 200 and 300). Therefore, it becomes possible to construct a system in which a processing load required to provide the report data can be reduced.

In this regard, although it has not been mentioned in the embodiment described above in particular, the mobile terminal management server 10 carries out each of the processes described above (see FIG. 4) in accordance with the processing program (a mobile terminal management program) stored in the storage medium included in the mobile terminal management server 10.

### Industrial Applicability

According to the present invention, it is useful to reduce a processing load required for a search of data and improve operability of a search operation of a mobile communication terminal in a business system (specifically, an ERP system) that provides information on a report to the mobile communication terminal.

### Explanation of Reference numerals

- 10: mobile terminal management server
- 20: relay apparatus
- 31 to 3N: mobile terminals
- 40: communication network
- 51, 52, 53: communication network
- 100, 200, 300: integrated core business system
- 110, 310: core business server
- 120, 220: DWH server
- 500: report inquiry system

## Claims

1. A mobile terminal management server for providing various kinds of data to a mobile terminal used by a user via a communication network in response to a request from the mobile terminal, the mobile terminal management server being a server in which ERP runs, the mobile terminal management server comprising:
a report data storage section for storing report data generated for each business unit in a business process;
a search condition designation screen providing section that provides a search condition designation screen used to designate a search condition in response to the request from the mobile terminal;
a search condition receiving section that receives a search condition designated through the search condition designation screen from the mobile terminal, the search condition including a search condition representing code information taken in the mobile terminal;
a report data searching section that searches for report data satisfying the search condition received by the search condition receiving section by referring to the report data storage section; and
a search result providing section that provides search result data to the mobile terminal as a search result, the search result data representing the report data searched by the report data searching section,
wherein a selection item arrangement circle display region is provided on the search condition designation screen to display a selection item arrangement circle in which a plurality of selection items selectable to designate a search condition are arranged substantially on a circumference thereof.

2. The mobile terminal management server according to claim 1, wherein a selection item rotation rendering setup is made in the selection item arrangement circle display region so that selection item rotation rendering in which the plurality of selection items are rotationally moved on the circumference of the selection item arrangement circle is carried out in accordance with a predetermined rotation instruction operation of the mobile terminal by the user.

3. The mobile terminal management server according to claim 1 or 2, wherein a plurality of selection item arrangement circle display regions are provided on the search condition designation screen.

4. The mobile terminal management server according to claim 3, wherein the plurality of selection item arrangement circle display regions are set up so that a part of the selection item arrangement circle display regions is partially superimposed, and the selection items arranged on the selection item arrangement circle displayed in each of the selection item arrangement circle display regions are configured to have a display form different from that of any other selection item arrangement circle.

5. The mobile terminal management server according to claim 3 or 4, wherein the plurality of selection item arrangement circle display regions are provided on the search condition designation screen for every predetermined class,
wherein selection items arranged substantially on a circumference of a first selection item arrangement circle displayed in a first selection item arrangement circle display region are report type selection items used to designate one or more report type as a search condition,
wherein selection items arranged substantially on a circumference of a second selection item arrangement circle displayed in a second selection item arrangement circle display region are detailed condition selection items used to designate one or more detailed condition among detailed conditions including at least one of a date, a customer, and an organization as a search condition,
wherein the search condition receiving section receives the search condition including the report type designated through the search condition designation screen and at least one of the detailed conditions from the mobile terminal, and
wherein the report data searching section searches for report data that have the designated report type and satisfy the designated detailed condition in accordance with the search condition received by the search condition receiving section.

6. The mobile terminal management server according to claim 5, wherein selection items arranged substantially on a circumference of a third selection item arrangement circle displayed in a third selection item arrangement circle display region are detailed condition selection items used to designate one or more business process as a search condition,
wherein the search condition receiving section receives the search condition including the business process designated through the search condition designation screen from the mobile terminal, and
wherein the report data searching section searches for report data of the designated business process in accordance with the search condition received by the search condition receiving section.

7. The mobile terminal management server according to any one of claims 1 to 6, wherein a search keyword input region used to input a search keyword is provided on the search condition designation screen,
wherein the search condition receiving section receives the search condition including a search keyword inputted into the search keyword input region from the mobile terminal, and
wherein the report data searching section searches for report data that satisfy the search condition further including the search keyword received by the search condition receiving section.

8. The mobile terminal management server according to any one of claims 1 to 7, wherein the code information is taken in the mobile terminal by reading out a code attached to predetermined goods by means of a code reader function with which the mobile terminal is provided.

9. The mobile terminal management server according to claim 8, wherein the code information is information by which item goods of the predetermined goods can be specified,
wherein the search condition represented by the code information is the item goods, and
wherein the report data searching section searches for report data containing item goods data representing the item goods of the predetermined goods.

10. A mobile terminal management program for causing ERP to run and causing a mobile terminal management server to carry out a process to provide various kinds of data to a mobile terminal used by a user via a communication network in response to a request from the mobile terminal, the mobile terminal management program causing the mobile terminal management server, provided with a report data storage section for storing report data generated for each business unit in a business process, to execute:
a search condition designation screen providing process to provide a search condition designation screen used to designate a search condition in response to the request from the mobile terminal, a selection item arrangement circle display region being provided on the search condition designation screen to display a selection item arrangement circle in which a plurality of selection items selectable to designate a search condition are arranged substantially on a circumference;
a search condition receiving process to receive a search condition designated through the search condition designation screen from the mobile terminal, the search condition including a search condition representing code information taken in the mobile terminal;
a report data searching process to search for report data satisfying the search condition received in the search condition receiving process by referring to the report data storage section; and
a search result providing process to provide the report data searched in the report data searching process as a search result.
